# EUROPEAN PATENT SPECIFICATION

(11) **EP 0 373 741 B1**
(45) Date of publication and mention of the grant of the patent: **27.09.1995**
(21) Application number: 89306091.3
(22) Date of filing: 15.06.1989
(51) Int. Cl.: B01J 27/12, B01J 37/26, C10G 45/62

(54) **Wax isomerization process using a catalyst with small particles and low fluoride content.**
Isomerisation von Wachs unter Verwendung eines Katalysators mit kleinen Partikeln und schwachem Fluorgehalt
Procédé d'isomérisation des cires utilisant un catalyseur à petites particules et à faible teneur en fluorure

(30) Priority: 16.12.1988 US 285437; 16.12.1988 US 285462
(43) Date of publication of application: 20.06.1990
(73) Proprietor: EXXON RESEARCH AND ENGINEERING COMPANY, Florham Park, New Jersey 07932-0390 (US)
(72) Inventor: Brown, David Lloyd, Wyoming Ontario N0N 1TO (CA); Cody, Ian Alfred, Clearwater Ontario N7T 7H6 (CA)
(74) Representative: Somers, Harold Arnold

(56) References cited:
- EP-A- 0 066 482
- EP-A- 0 321 229
- CA-A- 1 177 810
- US-A- 2 668 866
- US-A- 4 612 293

## Description

Isomerisation processes are known from the prior art documents.

US-A-2 668 866 discloses a process for the isomerization of a paraffin wax which comprises vaporizing a normally solid paraffin wax and contacting the wax completely in the vapor phase with at least one mole of hydrogen per mole of said wax with a supported platinum catalyst at a temperature between about 300° C. and about 550° C.

US-A-4 612 293 discloses a process for the isomerisation of C₅ hydrocarbon, wherein catalyst are used containing 2-10 wt% fluoride based on the total weight of finished catalyst.

The present invention relates to a wax isomerization process.

According to the invention a wax isomerization process employs a refractory metal oxide catalyst of small particle size comprising a noble metal and a low fluoride content in the range of from 0.1 to up to, but less than, 2 wt.% fluoride, and a refractory metal oxide particle diameter of less than 1/16 inch (1.59 mm).

Preferably the fluoride content is 0.1 to 1.5 wt.%, more preferably 0.2 to 1.0 wt.%.

Noble metals of choice include platinum and palladium. Preferably the refractory metal oxide is alumina or material containing alumina, preferably predominantly (i.e. >50%) alumina, more preferably an alumina such as gamma or eta alumina extrudates. The most preferred alumina is 1/20 inch (1.27 mm) alumina trilobes.

The waxes employed in the isomerization process include (1) natural waxes, for example slack-waxes obtained by the dewaxing of hydrocarbon oils and (2) synthetic waxes, obtained for example from Fischer-Tropsch synthesis processes.

Liquid hydrocarbons boiling in the lube oil boiling range, e.g. 370°C+, are typical products of the isomerization process of the invention. The process is normally accomplished by passing the wax over the isomerization catalyst in the presence of hydrogen under isomerization conditions.

The catalyst employed is made by depositing the noble Group VIII metal on the small particle size refractory metal oxide support, calcining the metal loaded support and fluoriding the metal loaded support using a fluoriding source solution such as HF or NH₄F, preferably NH₄F, to a total fluoride level of 0.1 to up to but less than 2 wt%. As previously stated, the support is of small particle size, less than 1/16 inch (1.59 mm) in diameter.

The refractory metal oxide support is preferably alumina or material containing alumina, preferably predominantly (i.e., >50%) alumina, more preferably gamma or eta alumina, most preferably 1/20 inch (1.27 mm) alumina trilobes.

The noble Group VIII metal is deposited on the support by any convenient method such as soaking, spraying, incipient wetness, solution exchange; etc., followed by drying, typically conducted at 120°C to 150°C, and calcination, typically conducted at 350° to 500°C, preferably 450° to 500°C, typically for from 1 to 5 hours. Suitable sources of noble Group VIII metal include chloroplatinic acid and fluoro platinic acid. Metal loading is from 0.1 to 2 wt%, preferably 0.1 to 1.0 wt%, most preferably 0.2 to 0.6 wt%. The preferred metal is platinum.

Following metal deposition, drying and calcination, the catalyst is fluorided. Total fluoride levels of 0.1 to up to but less than 2.0 wt% are produced using fluoride solution, e.g., HF or NH₄F solutions, preferably aqueous NH₄F solutions. Following fluoriding the catalyst is dried. Fluoriding is conducted using any convenient method such as soaking, spraying, incipient wetness, etc.

The small particle size catalyst is usually activated prior to use by heating in a hydrogen atmosphere (e.g., pure or plant hydrogen (i.e., ∼60 to 70 vol.% H₂)) to from 350° to 500°C for from 1 to 48 hours or longer.

A typical hydrogen activation profile may be a period of 2 hours to go from room temperature to 100°C with the catalyst being held at 100°C from 0 to 2 hours, then the temperature is raised from 100 to about 350° to 500° C, preferably 350° to 450°C over a period of 1 to 3 hours with a hold at the final temperature of from 1 to 4 hours. Alternatively, the catalyst can be hydrogen activated by heating from room temperature to the final temperature of 350° to 500°C preferably 350° to 450°C over a period of 2 to 7 hours with a hold at the final temperature of 0 to 4 hours. Similarly, hydrogen activation can be accomplished by going from room temperature to the final temperature of 350° to 500°C preferably 350° to 450°C in 1 hour.

The small particle size catalyst can be produced by starting with a small particle, one already smaller than 1/16 inch (1.59 mm) in diameter, preferably a 1/20 inch (1.27 mm) alumina trilobe and depositing the noble Group VIII metal and fluoride therein. Alternatively, a larger particle can be metal loaded and fluorided to the desired level, then crushed and sized to recover catalyst particles of less than 1/16 inch (1.59 mm) in diameter.

As previously stated, the wax employed is any readily available natural or synthetic wax. Natural waxes include those waxes obtained by dewaxing natural hydrocarbons, commonly called slack waxes. Slack waxes contain anywhere from 0 to 45% oil more typically 35% oil or less depending on the molecular weight of the oil being dewaxed to a specific pour point.

Slack waxes, coming from natural petroleum sources, contain numerous molecular species such as heteroatom compounds and polynuclear aromatic materials which are detrimental to the life and activity of isomerization catalysts. Thus, the heteroatoms should be removed prior to isomerization using a hydrotreating catalyst under mild hydrotreating conditions. Exemplary of hydrotreating catalysts are Ni/Mo on alumina, Co/Mo on alumina. Hydrotreating conditions are 250-400°C; 0.1-10 LHSV; 500 to 3000 psi (3.45 to 20.69 MPa) H₂; 500-2000 SCF H₂/bbl (88.5 to 354.0 std m³/m³). Following hydrotreating acceptable levels will be a nitrogen content of about 1-5 ppm, preferably 2 ppm and less and a sulfur content of about 1-20 ppm, preferably 5 ppm and less.

Synthetic waxes such as those obtained from Fischer-Tropsch synthesis processes can also be used as the wax feed to the isomerization process. Because such waxes are usually free of sulfur and nitrogen compounds, hydrotreating to remove S and N is not needed. Synthetic waxes, however, may contain other polar or oxygenated components and trace metals which should be removed prior to isomerization so that the resulting isomerate exhibits satisfactory daylight and oxidation stability. The waxes are also very high melting and should be softened somewhat to facilitate handling prior to isomerization. These two goals can be accomplished by treating the synthetic wax with a hydrotreating catalyst and hydrogen to reduce the oxygenate and trace metal levels of the wax and to partially hydrocrack/isomerize the wax to lighter and lower melting point materials.

Isomerization over the small particle size catalyst is preferably conducted at a temperature of 300-400°C, 500 to 3000 psi (3.45 to 20.69 MPa) H₂; 1000-10,000 SCF/bbl (177.0 to 1770.0 std m³/m³), H₂ flow rate, and 0.1-10.0 LHSV, preferably 320-385°C, 1000-1500 psi (6.90 to 10.34 MPa) H₂, and 1-2 V/V/hr.

The desired conversion of wax to a finished grade lube oil is dictated by two factors: (1) the ability of the dewaxing unit to process the unconverted wax remaining in the isomerate and (2) maximum production of dewaxed oil boiling in the lube oil range, e.g., about 330°C+, preferably 370°C+; thus high levels of conversion to non lube boiling range products are undesirable. Consequently, a balance must be struck between low conversions (favoring lubes production but sending too much residual wax to the dewaxer) and high conversion (sending law levels of wax to the dewaxer but producing fuels at the expense of lubes).

Following isomerization the isomerate is fractionated into a lubes cut and fuels cut, the lubes cut being identified as that fraction boiling in the 330°C+ range, preferably the 370°C+ range or even higher. The lubes fraction is then dewaxed to a pour point of about -21°C or lower. Dewaxing is accomplished by techniques which permit the recovery of unconverted wax, since in the process of the present invention this unconverted wax is recycled to the isomerization unit. It is preferred that this recycle wax after the removal of the solvent used in the dewaxing operation be recycled to the isomerization reactor. A separate stripper can be used to remove entrained dewaxing solvent or other contaminants.

Solvent dewaxing utilizes typical dewaxing solvents such as C₃-C₆ ketones (e.g., methyl ethyl ketone, methyl isobutyl ketone and mixtures thereof), C₆-C₁₀ aromatic hydrocarbons (e.g., toluene) mixtures of ketones and aromatics (e.g., MEK/toluene), auto-refrigerative solvents such as liquified, normally gaseous C₂-C₄ hydrocarbons such as propane, propylene, butane, butylene, etc., at filter temperature of -25 to -30°C. It has been discovered that the preferred solvent to dewax the isomerate under miscible conditions and thereby produce the highest yield of dewaxed oil at a high filter rate is a mixture off MEK/MIBK (20/80 v/v) used at a temperature in the range of -25 to -30°C. Pour points lower than -21°C can be achieved using lower filter temperatures and other ratios of said solvent. Further, when dewaxing isomerate made from a microwax, e.g., Bright Stock slack wax, it has been found to be preferred that the fraction of the isomerate which is dewaxed is the "broad heart cut" identified as the fraction boiling between about 330° to 600°C, preferably 370-600°C. When processing wax fractions higher than 1050°F+ (565°C+) the heavy bottoms fraction contains appreciable unconverted wax so they can be recycled to the hydrotreating unit.

It has also been found that prior to fractionation of the isomerate into various cuts and dewaxing said cuts, the total liquid product (TLP) from the isomerization unit can be advantageously treated in a second stage at mild conditions using the isomerization catalyst or a noble Group VIII on refractory metal oxide catalyst to reduce PNA and other contaminants in the isomerate and thus yield an oil of improved daylight stability.

In that embodiment, the total liquid product in passed over a charge of the isomerization catalyst or over noble Group VIII on e.g. gamma alumina catalyst under mild conditions, e.g., a temperature in the range of about 170-270°C, preferably about 180° to 220°C at a pressure of about 300-1500 psi H₂ (2.07-10.34 MPa), preferably about 500 to 1000 psi (3.45 to 6.90 MPa) H₂, a hydrogen gas rate of about 500 to 10,000 SCF/bbl (88.5 to 1770 st m³/m³), preferably 1000 to 5000 SCF/bbl (177.0 to 885.0 st m³/m³) and a flow velocity of about 0.25 to 10 v/v/hr., preferably about 1-4 v/v/hr.

The total liquid product can be treated under these mild conditions in a separate, dedicated unit or the TLP from the isomerization reactor can be stored in tankage and subsequently passed through the isomerization reactor under said mild conditions. It has been found to be unnecessary to fractionate the total liquid product prior to this mild second stage treatment. Subjecting the whole TLP to this mild second stage treatment produces an oil product which upon subsequent fractionation and dewaxing yields a base oil exhibiting a high level of daylight stability and oxidation stability.

### EXAMPLES

### Example 1

Five catalysts were prepared and compared for wax isomerization. Catalysts 1 and 2 were low fluoride content materials using 1/20 inch (1.27 mm) alumina trilobes as support. Catalyst 3 was a low fluoride content material which used a 1/16 (1.59 mm) inch extrudate as support. Catalysts 4 and 5 were high fluoride content materials which used 1/16 (1.59 mm) inch alumina extrudates and 1/20 (1.27 mm) inch alumina trilobes, respectively, as support. All of the catalysts were fluorided using aqueous NH₄F solution, contained platinum as the catalytic metal component, and were calcined at 400°C after fluorination. The catalysts were evaluated in a tubular reactor containing 200 cc of catalyst and with feed introduced in an upflow mode.

The isomerization feed was a slack wax obtained from the dewaxing off a 600N oil. The slack wax contained about 20% oil in wax and was hydrotreated using commercial KF-840 catalyst (Ni/Mo alumina) to a sulfur level of <5 ppm and a nitrogen level of <1 ppm.

The results of isomerizing the wax using the five catalysts are summarized in Table 1.

**TABLE 1**

| YIELD ADVANTAGES AT LOW FLUORIDE CONTENT AND SMALL PARTICLE SIZE | | | | | |
|---|---|---|---|---|---|
| Catalyst Composition | 1 | 2 | 3 | 4 | 5 |
| F, wt% | 0.93 | 0.5 | 0.42 | 7.0 | 6.7 |
| Pt, wt% | 0.3 | 0.3 | 0.3 | 0.58 | 0.62 |
| Particle Diameter (inch)(mm) | 1/20(1.27) | 1/20(1.27) | 1/16(1.59) | 1/16(1.59) | 1/20(1.27) |
| Shape (1) | T | T | E | E | T |
| Reaction Temp, °C (2) | 355 | 370 | 380 | 320 | 330 |
| Pressure, psi H₂ (MPa) | 1000(6.9) | 1000(6.9) | 1000(6.9) | 1000(6.9) | 1000(6.9) |
| LHSV, v/v/hr | 1.0 | 1.0 | 1.0 | 1.0 | 1.0 |
| Gas Rate,SCF/B (st m³/m³) | 2500 (442.5) | 2500 (442.5) | 2500 (442.5) | 2500 (442.5) | 2500 (442.5) |
| 370°C+ Yield on feed, wt.% (3) | 60 | 67 | 55 | 50 | 50 |

| | | | | | |
|---|---|---|---|---|---|
| (1) E=extrudate, T=trilobe | | | | | |
| (2) Temperature required for 70% conversion of wax in feed after 250 hours on stream | | | | | |
| (3) Maximum once-through yield of 370°C+ oil based on oil content determination using 100% MIBK | | | | | |

From the above it is clear that an isomerization catalyst having low fluoride content and small particle size, i.e. a particle size of less than 1/16 inch (1.59 mm) and isomerization using said catalyst are superior as compared to large particle, high fluoride content catalyst and isomerization using catalysts having high fluorine contents or large particle size. Catalysts 1 and 2 which possess both low fluorine content and small particle size are superior to catalyst 3, which has low fluorine but larger particle size and to catalyst 5 which has small particle size but high fluorine and to catalyst 4 which had both high fluorine and larger particle size. Reference to catalyst 5 shows that possession of small particle size is not in itself sufficient to produce a catalyst of superior selectivity. Similarly reference to catalyst 3 shows that low fluorine control is also not in itself sufficient to produce a catalyst of superior selectivity. It is necessary that the catalyst possess both low fluorine and small particle size.

### Example 2

This example is offered to show that catalysts fluorided using aqueous NH₄F solutions and having noble Group VIII metal are preferred.

Three catalysts were prepared on 1/16 inch (1.59 mm) extruder while this size base is not within the scope of this present invention, the example is offered to show that NH₄F is the preferred fluoriding solution.

The feed is hydrotreated slack wax obtained by dewaxing 600N oil, and is the same as described in Example 1, but the test unit was smaller with only 80 cc of catalyst charge. Feed was again introduced in an upflow mode. Experience has shown that yields obtained from the smaller charge are consistently lower than yields obtained from the larger unit of Example 1.

The results of isomerizing the wax using these three different catalyst are summarized in Table 2.

**TABLE 2**

| NH₄F TREATED CATALYST IS MORE ACTIVE THAN HF TREATED CATALYST | | | |
|---|---|---|---|
| Catalysts (1) | 6 | 7 | 8 |
| Metal, wt% | 0.3, Pt | 0.3, Pt | 2.0, Ni |
| F, wt% | 0.5 | 0.5 | 0.5 |
| Particle Size | 1/16"(1.59mm) Extrudate | 1/16"(1.59mm) Extrudate | 1/16"(1.59mm) Extrudate |
| Source of Fluoride | HF (aq) | NH₄F (aq) | NH₄F (aq) |

| Conditions | | | |
|---|---|---|---|
| Temperature, °C | 380 | 364 | 385 |
| Pressure,psi H₂(MPa) | 1000(6.9) | 1000(6.9) | 1000(6.9) |
| Space Velocity, v/v/hr | 0.9 | 0.9 | 0.9 |
| Gas Rate, SCF/B, H₂ (st m³/m³) | 5000 (885) | 5000 (885) | 5000 (885) |
| Time on Stream, hour | 80 to 81 | 102 to 104 | 65 to 66 |
| 370°C+ Yield on feed, wt.% (2) | 52.9 | 52.2 | 40.6 |
| 370°C- | 28.5 | 23.5 | 27.9 |

| | | | |
|---|---|---|---|
| (1) All catalyst 1/16" (1.59mm) extrudates | | | |
| (2) Maximum once-through yield of 370°C+ oil based on oil content determination using 100% MIBK | | | |

Catalysts 6 and 7 both contained the same level of fluoride loading (0.5 wt%) and the same amount of platinum (0.3 wt%); The only difference in their preparation was the type of fluoride source used. Catalyst 6 was fluorided using aqueous HF while catalyst 7 was fluorided using aqueous NH₄F. Both catalyst were run to produce maximum yields off 370°C+ oil. Both catalysts produced approximately the same amount of such oil (52.9% for catalyst 6 and 52.2% for catalyst 7) but catalyst 6, made using HF was 16°C less active than catalyst 7, made using NH₄F. From this it is clear that catalyst made using NH₄F as the fluoriding solutions are preferred.

## Claims

1. A wax isomerization process employing a refractory metal oxide catalyst of small particle size comprising a noble metal and a low fluoride content in the range of from 0.1 to up to, but less than, 2 wt.% fluoride, and a refractory metal oxide particle diameter of less than 1/16 inch (1.59 mm).

2. The process of claim 1 wherein the fluoride content of the catalyst is in the range of from 0.1 to 1.5 wt% fluoride.

3. The process of claim 1 or claim 2 wherein the refractory metal oxide of the catalyst is alumina or at least 50% alumina.

4. The process of any one of claims 1 to 3 wherein the diameter of the refractory metal oxide of the catalyst is 1/20 inch (1.27 mm) alumina trilobe.

5. The process of any one of claims 1 to 4 wherein the noble metal of the catalyst is the sole metallic component of the catalyst.

6. The process of any one of claims 1 to 5 wherein the noble metal of the catalyst is Pt or Pd.

7. The process of claim 6 wherein the noble metal is present in the range of from. 0.1 to 2.0 wt%.

8. The process of any one of claims 1 to 6 wherein the fluoride is deposited on the catalyst using NH₄F solution.

9. The process of any preceding claim wherein the wax used in the isomerization process is a synthetic wax or a slack wax.

10. The process of claim 9, wherein the wax employed is from a Fischer-Tropsch synthesis.

## Patentansprüche

1. Verfahren zur Isomerisierung von Paraffin, bei dem ein hitzebeständiger Metalloxid-Katalysator mit kleiner Teilchengröße verwendet wird, der ein Edelmetall, einen niedrigen Fluorid-Gehalt im Bereich von 0,1 bis zu, aber weniger als, 2 Gew.-% Fluorid und einen Teilchendurchmesser des hitzebeständigen Metalloxids von weniger als 1,59 mm (1/16 inch) umfaßt.

2. Verfahren nach Anspruch 1, bei dem der Fluorid-Gehalt des Katalysators im Bereich von 0,1 bis 1,5 Gew.-% liegt.

3. Verfahren nach Anspruch 1 oder Anspruch 2, bei dem das hitzebeständige Metalloxid des Katalysators Aluminiumoxid oder zumindest 50 % Aluminiumoxid ist.

4. Verfahren nach einem der Ansprüche 1 bis 3, bei dem das hitzebeständige Metalloxid des Katalysators ein dreiflügeliges Aluminiumoxid-Extrudat mit einem Durchmesser von 1,27 mm (1/20 inch) ist.

5. Verfahren nach einem der Ansprüche 1 bis 4, bei dem das Edelmetall des Katalysators die einzige metallische Komponente des Katalysators ist.

6. Verfahren nach einem der Ansprüche 1 bis 5, bei dem das Edelmetall des Katalysators Pt oder Pd ist.

7. Verfahren nach Anspruch 6, bei dem das Edelmetall im Bereich von 0,1 bis 2,0 Gew.-% vorhanden ist.

8. Verfahren nach einem der Ansprüche 1 bis 6, bei dem das Fluorid unter Verwendung einer NH₄F-Lösung auf das Metall aufgebracht wird.

9. Verfahren nach einem der vorhergehenden Ansprüche, bei dem das im Isomerisierungsverfahren verwendete Paraffin ein synthetisches oder ein Rohparaffin ist.

10. Verfahren nach Anspruch 9, bei dem das verwendete Paraffin aus einer Fischer-Tropsch-Synthese stammt.

## Revendications

1. Procédé d'isomérisation de paraffines en mettant en oeuvre un catalyseur d'oxyde de métal réfractaire de faible calibre particulaire, comprenant un métal noble et une faible teneur en fluorure dans la plage de 0,1 à 2 % en poids, mais inférieure à cette dernière limite, et un diamètre particulaire de l'oxyde de métal réfractaire de moins de 1,59 mm (1/16e de pouce).

2. Procédé selon la revendication 1, dans lequel la teneur en fluorure du catalyseur se situe dans la plage de 0,1 à 1,5 % en poids.

3. Procédé selon la revendication 1 ou 2, dans lequel l'oxyde de métal réfractaire du catalyseur est l'alumine ou au moins 50 % d'alumine.

4. Procédé selon l'une quelconque des revendications 1 à 3, dans lequel le diamètre de l'oxyde de métal réfractaire du catalyseur est 1,27 mm(1/20e de pouce) en alumine trilobée.

5. Procédé selon l'une quelconque des revendications 1 à 4, dans lequel le métal noble du catalyseur est le seul composant métallique du catalyseur.

6. Procédé selon l'une quelconque des revendications 1 à 5, dans lequel le métal noble du catalyseur est Pt ou Pd.

7. Procédé selon la revendication 6, dans lequel le métal noble est présent dans la plage de 0,1 à 2,0 % en poids.

8. Procédé selon l'une quelconque des revendications 1 à 6, dans lequel le fluorure est déposé sur le catalyseur en utilisant une solution de NH₄F.

9. Procédé selon l'une quelconque des revendications précédentes, dans lequel la paraffine utilisée dans le procédé d'isomérisation est une paraffine synthétique ou une paraffine brute non déshuilée.

10. Procédé selon la revendication 9, dans lequel la paraffine utilisée provient d'une synthèse de Fischer-Tropsch.
